# EUROPEAN PATENT APPLICATION

(11) **EP 1 510 935 A1**
(43) Date of publication of application: **02.03.2005**
(21) Application number: 03019748.7
(22) Date of filing: 29.08.2003
(51) Int. Cl.: G06F 17/30

(54) **Mapping a data from a data warehouse to a data mart**

(71) Applicant: SAP Aktiengesellschaft, 69190 Walldorf (DE)
(72) Inventor: Dupont, Kay, 59399 Olfen (DE); Eisenmann, Eva, 81735 Muenchen (DE); Kaiser, Dietmar, Dr., 69181 Leimen (DE); Otte, Kurt-Ulrich, Dr., 39175 Biederitz (DE); Zimmermann, Volker, 68163 Mannheim (DE)
(74) Representative: Richardt, Markus Albert, Dipl.-Ing.

(57) **Abstract**

A method and system and a computer program are provided for allowing users to extract predetermined, specialized content out of an Online transaction processing system (OLTP) into the portfolio management system database using data warehouse as a filtering device in an integrated database system. The use of the data warehouse as a filter involves determining a data structure representation for data sets stored in the data warehouse that conforms to the portfolio management system database schema, mapping data structure defined in the data warehouse schema to data structure supported by the portfolio management database and extracting predetermined data sets for use in the future processes.

## Description

### Field of the invention

The present invention relates in general to a data management method and a system and, in particular, to a method and a system for providing data sets to a portfolio management system database.

### Background and prior art

Enterprise database systems can be divided into two categories: operational and informational. Operational databases function as repositories for data produced by online transaction processing systems of the manufacturing, production, and transactional systems. On the other hand, informational databases store data for use in decision support and information processing systems. Informational databases include data warehouses and portfolio management system databases.

Data warehouses, like for example SAP Business Warehouse (BW), were designed and developed as a solution to problems of users submitting queries directly, slowing down the performance of online transaction processing systems which require a minimum guaranteed response time with uninterrupted availability and jeopardizing important production system functions. This, along with the risks associated with giving the extended e-business enterprise direct access to online transaction processing systems, constituted urgent necessity to store data in an environment that is not only optimised for business analysis and reporting, but also for secure broad access.

U.S. Pat. No 6,490,590 (Fink) discloses a method and system for improved data modelling, extraction and loading routines where detailed description of the prior art extraction and loading technique and the related prior art problems are included.

Portfolio management system with its database was developed for specialized informational purposes in order to support managers in their strategic decisions, like for example SAP Real Estate portfolio management system. The dynamic nature of today's market caused portfolio management to evolve into an increasingly complex environment. It involves the utilization of a variety of tools covering a wide range of functions. A typical portfolio manager must stay abreast of changing market conditions and numerous factors related to the portfolios they manage. These factors include knowing the most recent portfolio's status as well as changes in the risk profile of a portfolio due to changing market conditions or risk attributes. Thus, it is crucial to have the most recent data available for decision making and for the successful management of the portfolios.

In the prior art however, the manually inputted data that was available to the portfolio management system was often delayed and inconsistent with the online transaction processing system data. Good quality integrated data available in data warehouses after the extraction from the online transaction processing system was not available to the portfolio management system.

### Summary of the invention

The present invention provides a system and method for updating a portfolio management system database with data retrieved from a online relational database by using data warehouse as a filtering device in an integrated database system. The program module filtering out the predetermined data sets determines the structure of the extracted content, determination involves mapping data structure defined in the data warehouse schema to data structure supported by the portfolio management database.

The present invention makes available an integrated data standard within each data warehouse system, for use in the portfolio management system, allowing for the advanced analysis and reporting based on the consistent data. Thus, since the integrated databases of online transaction processing, data warehouse and portfolio management system use the same data, the duplication of data is avoided. Also, the present invention enables portfolio managers to make decisions faster and thus achieve considerable cost savings.

Since the data must be mapped before it can be extracted and transformed, a transformation has to be defined for all data from each data source. Transformation is the process of mapping data from source objects onto target objects and optionally applying conversions to the data. After the transformations have been defined, then scripts are generated, which perform the function of converting and loading data into target objects at run time when so requested.

In the prior art, a transformation had to be defined for the online transaction processing data, in order to make possible mapping onto the target objects in the data warehouse system. In the present invention the data is mapped from data warehouse objects onto the portfolio management system objects in order to make extraction for portfolio management possible.

### Brief description of the drawings

- Figure 1: is a block diagram of a integrated database system where the data sets received from the online transaction processing system are filtered out with the use of the data warehouse and made available to the portfolio management system.
- Figure 2: is a flowchart of a process describing a method of the present invention.
- Figure 3: illustrates mapping of objects from data warehouse onto the objects of the portfolio management system.

### Detailed description

The claimed invention is applicable to many different industries. One skilled in the art will appreciate that the various embodiments and concepts of the present invention are applicable to plurality of industries without straying from the spirit of the present invention.

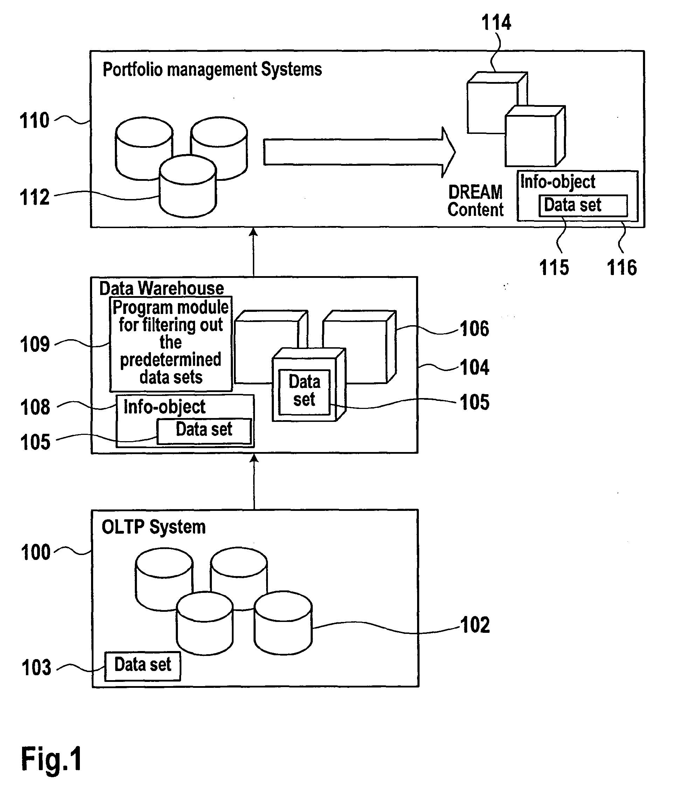

Figure 1 illustrates a block diagram showing an integrated database system where data sets are provided to a portfolio management system database. The integrated database system comprises online transaction processing system (OLTP) 100 that comprises one or more tables 102 each configured to store a plurality of data sets 103. The data sets undergo aggregation and reformatting as they are transferred to the data warehouse. This is a process of standard mapping where the data sets from the source (operational data) are mapped to the target database (data warehouse).

In the data warehouse 104 the process of the new mapping and extraction takes place. That means that the data sets are this time extracted out from the data warehouse into the portfolio management system 110 for the use in the future processes and in the analysis and planning. The data sets 105 received from the online transaction processing system are stored in the Info-cube, a multidimensional data model 106 of the SAP Business Information Warehouse.

An Info-cube comprises a plurality of relational tables that are created according to the star schema: a large fact table in the centre, with several dimension tables surrounding it. Data sets 105 received from the online transaction processing system can be also loaded into the info-objects 108. Each SAP info-object has characteristics with attributes, texts, or hierarchies; in prior art it has functioned as a data target, in the present invention, it functions as a data source.

In the next step, the determination of a data structure representation for data sets stored in the data warehouse that conforms to the portfolio management system database schema takes place. A data structure representation for data sets stored in the data warehouse has to be determined using the program module for filtering out the predetermined data sets 109, in order to accomplish the task of mapping the objects of the data warehouse onto the objects of portfolio management system database 112, and not like it was in a case of prior art mapping where the online transactional processing system data was mapped onto the data warehouse objects. The analysis is done field by field, character by character, to establish actual contents, and to determine acceptable data structures for organizing the data.

Thus, data sets 105 from source objects located in the data warehouse 108 are mapped onto target objects of the portfolio management system database 116 and conversions to the data sets 105 are optionally applied resulting in providing the filtered out data sets 115 that are stored in the Info-cubes 114 of the Dynamic Real Estate Analysis Model and can be used in the future processes. Then, correlations between objects 108 of data warehouse database and objects of a portfolio management system database 116 are indicated. Also, mapping data types associated with objects of the data warehouse schema to data types supported by said portfolio management system database takes place. Data types describe the technical attributes of data objects. They are purely descriptive and do not take up any memory space.

The mapping can take place on the individual basis, manually or automatically, on the mass scale. In both cases, one or more data warehouse objects are mapped onto the portfolio management system objects using unique identification (a key). Manual mapping of source objects using GUI interface has such an advantage that if manager, for example, needs to group the objects for increasing their value, he is able to do so. However, the mapping can be done also automatically, on the mass scale. In both cases objects are usually mapped with their hierarchies even though single objects can be taken out of the hierarchy if so requested.

After the transformations have been defined, and data is mapped from the objects of the data warehouse onto the target portfolio management system, then scripts are generated, which perform the function of converting and loading data into target objects at run time for this specialized extraction. An extraction variant is defined which joins together several fields. All fields that belong to one extraction variant are extracted together.

Each extraction variant is allocated a function module for example:

| **Extraction varaiant** | **Function module** |
|---|---|
| CD_ACCSTCT | Z_REPF_CURRD_ACCSTCT |
| CD_VOACLO | Z_REPF_CURRD_VOACLO |
| CD_VOACRU | Z_REPF_CURRD_VOACRU |
| CD_VOACRU1 | Z_REPF_CURRD_VOACRU1 |
| CD_VOMDLO | Z_REPF_CURRD_VOMDLO |
| MD_CONTR | Z_REPF_EXTR_CONTRACT_EXTRACT |
| MD_RU | Z_REPF_EXTR_RENTUNIT_EXTRACT |
| MD_VLOBJ | Z_REPF_EXTR_VLOBJ_MD_EXTRACT |

However, also different function modules including those especially customized for the customers can be assigned to the extraction variants. For all the extraction variants, the table structure is the same. Included in the table attributes are also evaluated.

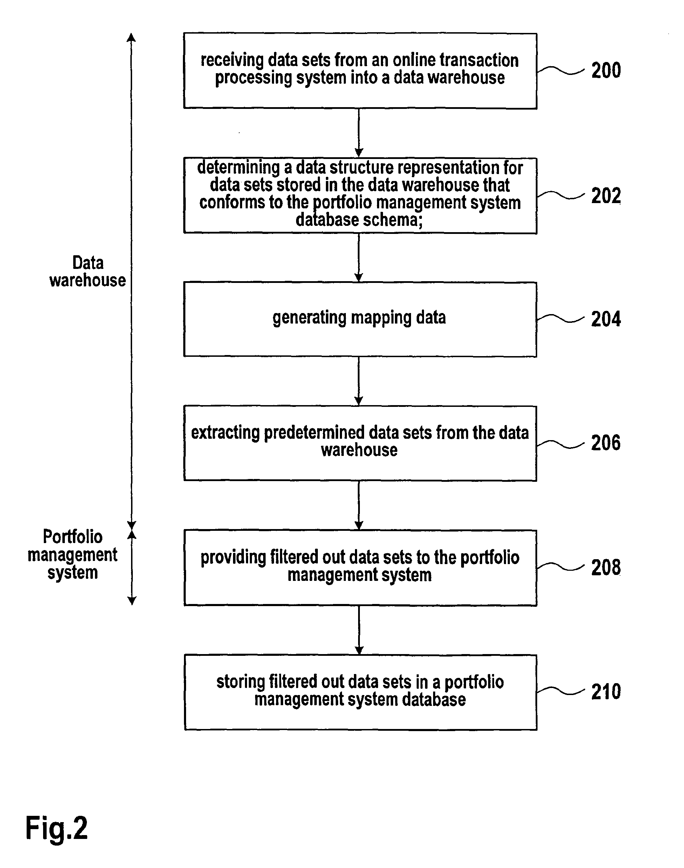

Figure 2 is a corresponding flow chart illustrating steps of a method of providing data sets to the portfolio management system. In the step 200 data sets from an online transaction processing system are recived in a data warehouse. The data sets are received as a result of the standard extraction process. In step 202 a data structure representation for data sets stored in the data warehouse conforming to the portfolio management system database schema is determined. Determining a data structure database representation involves, for example, determining the database objects that are to be used by the database system. The determining a data structure representation includes further mapping data types associated with objects of the data warehouse schema onto the data types supported by said portfolio management system database. Also, this step creates a cross reference, at the field level, of what data goes where. The next step 204 involves generating mapping data, in other words, the required scripts are generated, which perform the function of converting and loading data into target objects, in this case portfolio management system objects and more specifically DREAM objects (Dynamic Real Estate Analysis Model) at run time. In step 206 the data sets are extracted from the data warehouse.

Different extraction variants can be defined. The user determines which extraction variant will be used. All fields that belong to one extraction variant are extracted together and for all variants the table structure is identical. In the next step 208, the filtered out data sets are provided to the portfolio management system for storage in the portfolio management system 210. The stored in the portfolio management system data sets are ready for use in further processes. Thus, the present invention for the first time makes available an integrated data warehouse data for use in the portfolio management system, allowing for the advanced analysis and reporting based on the consistent data. Also, since the integrated databases of online transaction processing, data warehouse and portfolio management system use the same data, the duplication of data is avoided.

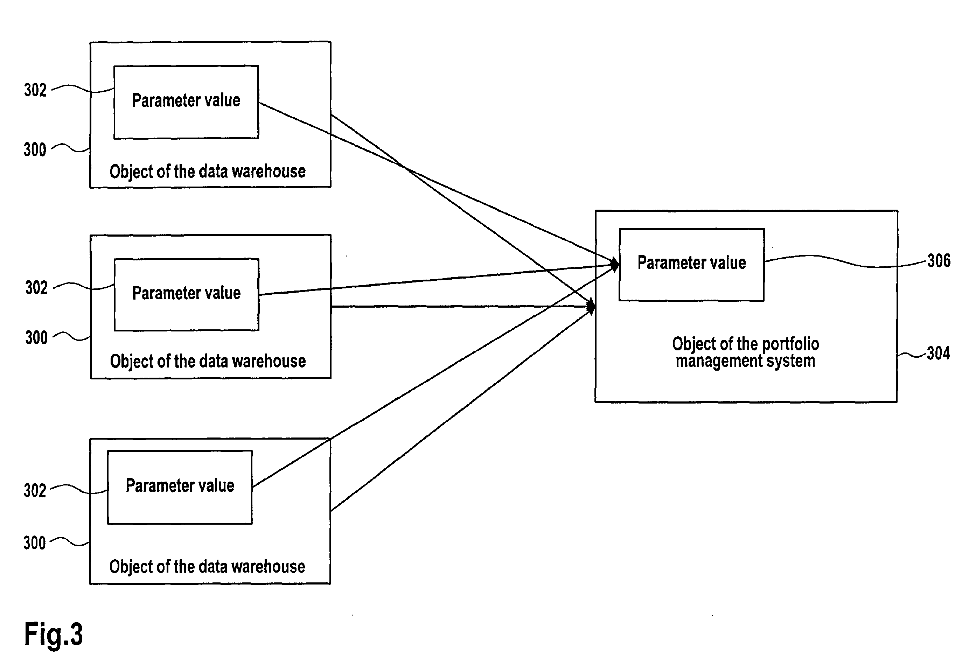

Figure 3 depicts the case when more then one info object 300 of the data warehouse is mapped onto the object of the portfolio management 304 and the mapped source objects have the same parameter values 302, in such a case the mapping onto the target object parameter value 306 is completed and the value is extracted. However, another, not shown possibility exists when the source objects stored in the data warehouse have different parameter values, in this case no value is extracted unless the user specifies which content should be extracted.

### List of Reference Numerals

- 100: online transaction processing system
- 102: database table
- 103: data set
- 104: data warehouse
- 105: data set
- 106: data warehouse Info-cube
- 108: Info-object
- 109: Program module for filtering out the predetermined data sets
- 110: Portfolio management system
- 112: Portfolio management system database table
- 114: Portfolio management system Info-cube
- 115: Filtered out data set
- 116: Portfolio management system info-object
- 300: Object of the data warehouse
- 302: Parameter value
- 304: Object of the portfolio management system
- 306: Parameter value

## Claims

1. A method for managing data in an integrated database system, the method comprising the steps of:
a) receiving data sets from an online transaction processing system into a data warehouse;
b) using the data warehouse as a filter for data sets received from the online transaction processing system;
c) providing filtered out data sets to a portfolio management system database;
d) storing filtered out data sets in the portfolio management system database.

2. The method of claim 1, wherein the step of using data warehouse as a filter further comprises determining a data structure representation for data sets stored in the data warehouse that conforms to the portfolio management system database schema.

3. The method of claim 1 or 2 , wherein the step of using data warehouse as a filter further comprises generating mapping data that indicates correlations between objects of data warehouse database and objects of the portfolio management system database.

4. The method of claim 1, 2 or 3, wherein the step of using data warehouse as a filter further comprises extracting predetermined data sets from the data warehouse.

5. The method of claim 2, wherein the determining a data structure representation includes determining, based on predefined specification, that one or more objects of said data warehouse are to be mapped to an object within said portfolio management system database; and the step of generating mapping data includes generating data that maps one or more said data warehouse objects to said single portfolio management system database object.

6. The method of claim 2, wherein the determining a data structure representation includes mapping data types associated with objects in said data warehouse schema to data types supported by said portfolio management system database.

7. The method of claim 2, wherein the determining an appropriate database representation includes defining an object type that includes parameter values that correspond to parameter values in portfolio management system database object.

8. The method of claim 4, wherein extracting predetermined data sets from the data warehouse includes extraction of all fields that belong to one extraction variant.

9. The method of claim 4, wherein for all extraction variants the table structure is identical.

10. A system for managing data in an interconnected database system, the system comprising:
a) means for receiving data sets (103) from an online transaction processing system (100) into a data warehouse (104);
b) means for using data warehouse (104) as a filter for data sets (103) received from the online transaction processing system;
c) means for providing filtered out data sets (115) to a portfolio management system database (110);
d) means for storing filtered out data sets (115) in the portfolio management system database (110).

11. The system of claim 10, wherein the means of using data warehouse as a filter further comprise the means for determining a data structure representation for data sets stored in the data warehouse that conform to a portfolio management system database schema.

12. The system of claim 11, wherein the means of using data warehouse as a filter further comprise the means for generating mapping data that indicates correlations between objects of data warehouse and objects of the portfolio management system database.

13. The system of claim 10, 11 or 12, wherein the means of using data warehouse as a filter further comprise the means for extracting predetermined data sets from the data warehouse.

14. A computer-readable storage medium holding program code for performing the steps of:
a. receiving data sets from the online transaction processing system into a data warehouse;
b. using data warehouse as a filter for data sets received from the online transaction processing system;
c. providing filtered out data sets to the portfolio management system database;
d. storing filtered out data sets in the portfolio management system database.

15. The computer-readable storage medium of claim 14, wherein the step of using data warehouse as a filter further comprises determining a data structure representation for data sets stored in the data warehouse that conform to a portfolio management system database schema.

16. The computer-readable storage medium of claim 14 or 15, wherein the step of using data warehouse as a filter further comprises generating mapping data that indicates correlations between objects of data warehouse database and objects of a portfolio management system database.

17. The computer-readable storage medium of claim 14, 15 or 16, wherein the step of using data warehouse as a filter further comprises extracting predetermined data sets from the data warehouse.
